# EUROPÄISCHE PATENTSCHRIFT

(11) **EP 0 392 189 B1**
(45) Veröffentlichungstag und Bekanntmachung des Hinweises auf die Patenterteilung: **04.08.1993**
(21) Anmeldenummer: 90104322.4
(22) Anmeldetag: 07.03.1990
(51) Int. Cl.: A01D 67/00, A01D 41/04

(54) **Landwirtschaftliches Trägerfahrzeug**
Agricultural carrier vehicle
Véhicule porteur agricole

(30) Priorität: 08.04.1989 DE 3911524
(43) Veröffentlichungstag der Anmeldung: 17.10.1990
(73) Patentinhaber: Claas OHG beschränkt haftende offene Handelsgesellschaft, D-33426 Harsewinkel (DE)
(72) Erfinder: Frederiksen, Nils, Dipl.-Ing., D-4834 Harsewinkel (DE); Heidjann, Franz, Dipl.-Ing., D-4834 Harsewinkel (DE); Kleinemenke, Heinrich, Dipl.-Ing., D-4834 Harsewinkel (DE)

(56) Entgegenhaltungen:
- DE-A- 2 133 779
- DE-A- 3 205 748
- DE-A- 3 217 113
- US-A- 3 108 703

## Beschreibung

Die Erfindung betrifft ein landwirtschaftliches Trägerfahrzeug gemäß dem Oberbegriff des Anspruchs 1, das zu verschiedenen Arbeitszwecken wie zum Pflügen, Schüttguttransport, Mähdrusch oder dergleichen eingesetzt werden kann. Aufgabe der Erfindung ist es, ein solches Fahrzeug möglichst schnell und sicher für verschiedene Arbeitszwecke umrüsten zu können und dabei gleichzeitig sicherzustellen, daß bei Verwendung einer Fahrerkabine die Sichtverhältnisse für den Fahrer unter Berücksichtigung gesetzlicher Vorschriften in jedem Einzelfall stets gleichbleibend so gut sind, wie dies bei Traktoren und selbstfahrenden Spezialerntemaschinen, wie Mähdreschern, Häckslern oder dergleichen der Fall ist. Bei einem aus der DE-A1-32 17 113 bekannten Mehrzweckfahrzeug ist die Fahrerkabine neben der Fördereinrichtung angeordnet, die das Erntegut vom Ernteaggregat zur Satteleinheit überführt. Je nach Ausbildung des Ernteaggregates ist die Fahrerkabine sehr stark einseitig versetzt, so daß die Sicht des Fahrers stark eingeschränkt ist.

Die Lösung der Aufgabe besteht in der Kombination der Merkmale nach dem kennzeichnenden Teil des Anspruchs 1 wodurch erreicht wird, daß die Fahrerkabine in etwa in der Mitte eines Trägerfahrzeugs angeordnet sein kann. Besonders vorteilhafte Ausgestaltungen und Weiterbildungen des Hauptvorschlages sind Gegenstand der Unteransprüche.

Im folgenden soll die Erfindung anhand eines Ausführungsbeispieles und mehrerer dieses schematisch darstellender Figuren näher erläutert werden.
Dabei zeigt:
- Fig. 1: ein Trägerfahrzeug mit vorderer Drescheinheit und aufgesetzter Satteleinheit in der Seitenansicht,
- Fig. 2: das in Fig. 1 dargestellte Trägerfahrzeug in der Draufsicht,
- Fig. 3: die Drescheinheit, das Trägerfahrzeug und die Satteleinheit in voneinander gelöster Stellung,
- Fig. 4: die in Fig. 3 dargestellte Satteleinheit in vergrößerter Darstellung,
- Fig. 5: das Trägerfahrzeug lediglich mit vorderer Häckseleinheit,
- Fig. 6: das in Fig. 5 dargestellte Trägerfahrzeug in der Draufsicht,

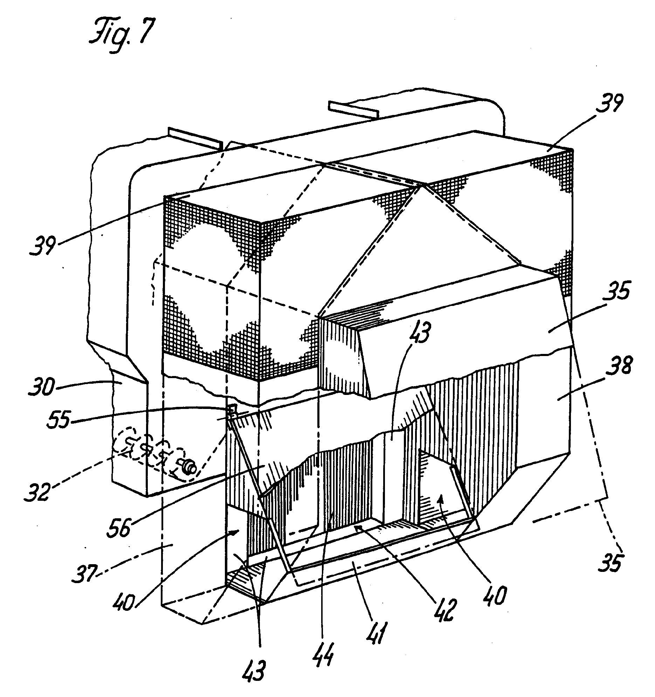

- Fig. 7: den hinteren Teil der Satteleinheit mit der Strohausfallöffnung und den Luftleit- und Filtergehäusen,

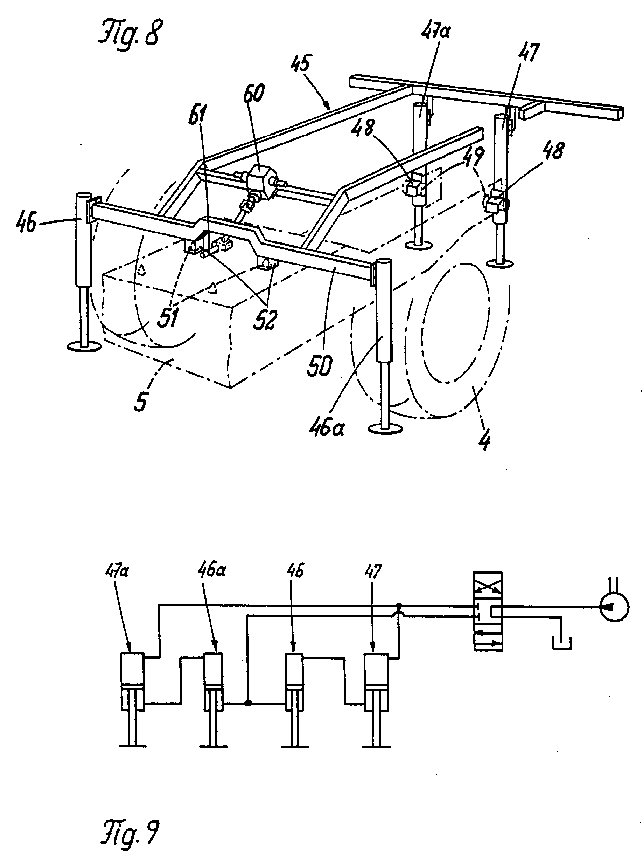

- Fig. 8: den Lagerrahmen der Satteleinheit mit vier Stützfüßen und
- Fig. 9: ein hydraulisches Schaltschema für die Betätigung der Stützfüße nach Fig. 8.

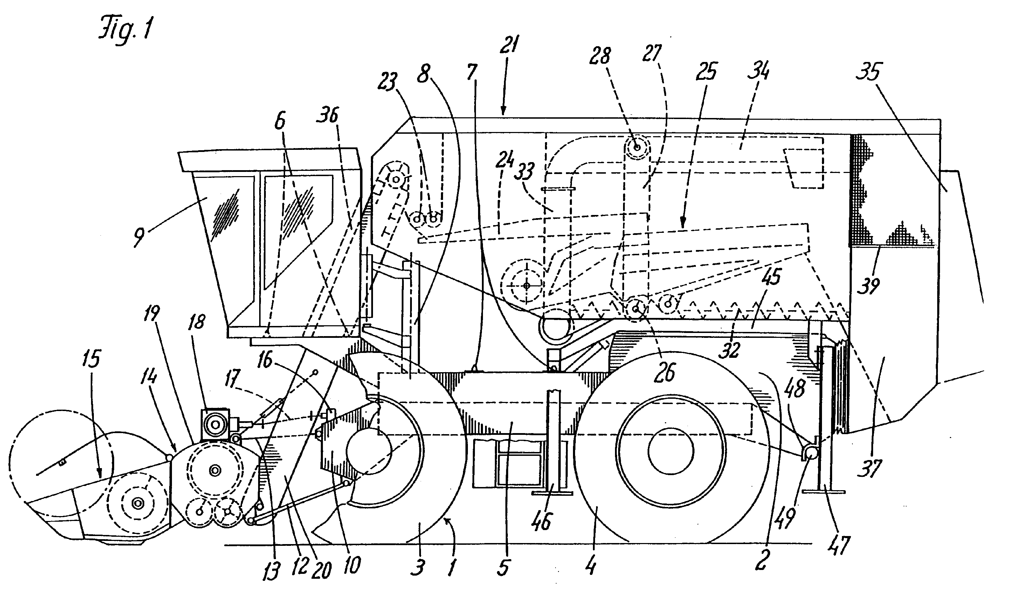

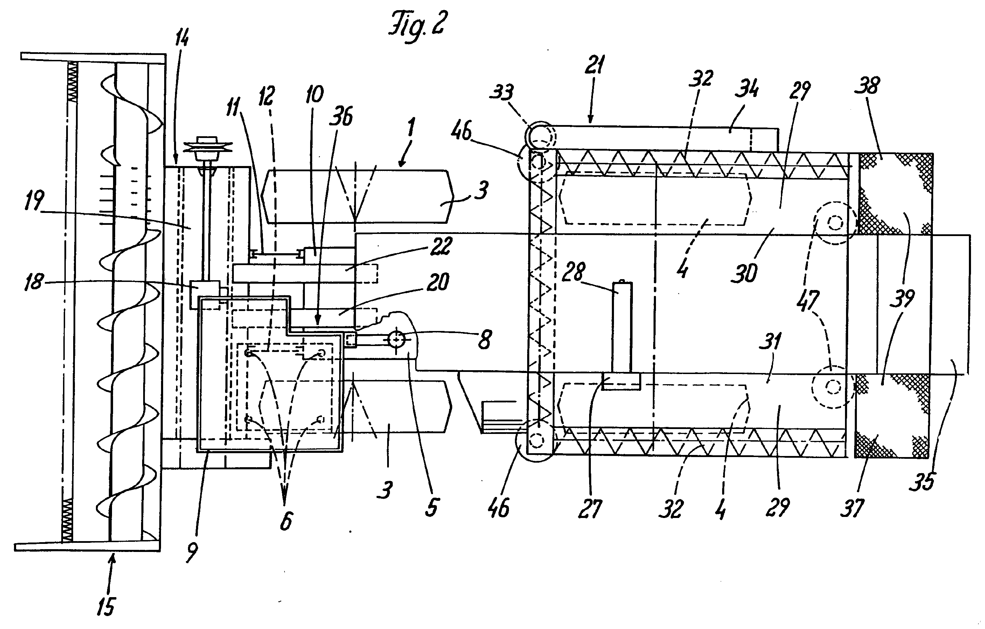

Mit 1 ist ein Trägerfahrzeug bezeichnet, mit vorderen lenkbaren und hinteren über einen Motor 2 antreibbaren Rädern 3 und 4. Der Rahmen 5 des Trägerfahrzeugs 1 weist zwei Aufnahmen 6 und 7 sowie eine hydraulische betätigbare Umsetzeinrichtung 8 auf, mittels der die Fahrerkabine 9 in eine der beiden Aufnahmen 6 oder 7 abgesetzt und dort verriegelt werden kann.Die Verriegelung erfolgt beispielsweise in der aus der DE-OS 30 24 664 bekannten Weise. Mit der Aufnahme 7 wird die Fahrerkabine verriegelt, wenn das Trägerfahrzeug 1 als Schlepper eingesetzt wird. Ansonsten ist die Fahrerkabine mit der Aufnahme 6 verriegelt, wie dies in Fig. 1 dargestellt ist. Aus dieser wie auch aus der Fig. 2 ist zu erkennen, daß der Rahmen 5 eine vordere Konsole 10 aufweist, mit der über zwei untere seitliche Lenker 11, 12 und einen oberen mittigen Lenker 13 eine Axial-, Dresch- und Trenneinheit 14 sowie eine davor angeordnete Schneidwerksmulde 15 verbunden ist.Der Antrieb der von der Konsole 10 getragenen Aggregate erfolgt im wesentlichen über einen Antrieb 16, eine Kardanwelle 17 und ein Getriebe 18, wobei der Antrieb 16 auf der Konsole 10 und das Getriebe 18, auf dem Gehäuse 19 der Axial-, Dresch- und Trenneinheit 14 sitzt. Das ausgedroschene Korn-Spreu-Gemisch gelangt über zwei parallel nebeneinander und mit gleichem Abstand von der Längsmittelebene des Trägerfahrzeugs 1 vorgesehene Elevatoren 20 und 22 zu der Satteleinheit 21. Diese weist Verteilschnecken 23 auf, mittels der das Gut dem Vorbereitungsboden 24 gleichmäßig zugeleitet wird. Von dort wird das Erntegut einer Windsiebeinrichtung bekannter Bauart 25 zugeführt. Das gereinigte Korn wird dann über eine Querförderschnecke 26, einen Elevator 27 und eine weitere obere Querförderschnecke 28 in einen an sich bekannten Satteltank 29 gefördert (siehe USA-PS 3108703). Den beiden seitlichen Taschen 30 und 31 dieses Tanks 29 wird das Korn am Tankboden, wie bekannt, über Schnecken 32, Höhenförderer 33 und Auslaufrohr 34 entnommen. Die Spreu gelangt über eine mittige Auswurfhaube 35 auf den Acker. Damit nun das in Fig. 1 und 2 dargestellte Fahrzeug auch auf öffentlichen Straßen bewegt werden darf, nachdem lediglich das Schneidwerk 15 abgekoppelt ist, ist die Fahrerkabine 9 mit einem Ausschnitt 36 versehen, in welchem ein Elevator 20 verläuft. Auf diese Weise ist es nämlich möglich, die Fahrerkabine weit zur Mitte des Trägerfahrzeugs 1 hinzusetzen, so daß die zulässige Fahrzeugbreite von 3,00 nicht durch die Fahrerkabine überschritten wird. Da der Ausschnitt 36 im hinteren Bereich der Fahrerkabine 9 vorgesehen ist, fällt die damit verbundene Verkleinerung des Kabineninnenraumes nicht störend oder einengend ins Gewicht.

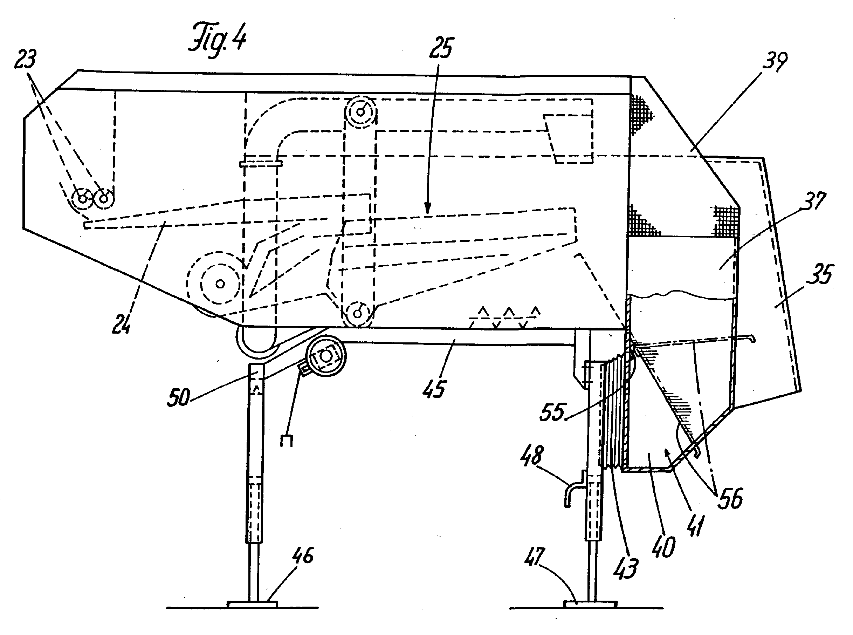

Wie aus den Fig. 1 bis 4 ersichtlich, schließen sich an die seitlichen Taschen 30 und 31 des Satteltanks 29 nach hinten allseits geschlossene Schächte 37 und 38 an, die im oberen Bereich Sieböffnungen 39 aufweisen, durch die Frischluft in die Schächte 37 und 38 gelangen kann. In diesem Bereich der Erntemaschine ist die Luft relativ frei von Staub und Schmutz. Im unteren Bereich haben die Schächte seitlich einander zugewandte Auslaßöffnungen 40, die miteinander über einen Kanal 41 verbunden sind, so daß sich an dieser Stelle keine verschmutzte Luft mit der sauberen Luft vermischen kann, wie dies im Prinzip aus der DE-OS 32 05 748 bekannt ist. Eine Seite des Kanals 41 ist offen. Diese offene Seite 42 ist über einen Faltenbalg 43 mit dem Kühlergrill 44 des Motors 2 ringsum dichtend verbunden, wobei auch die zur Verbrennung des Motors 2 erforderliche Luft von hier abgezweigt sein kann. Die obere Begrenzung, des die beiden Schächte 37, 38 verbindenen Kanals 41 erfolgt durch eine über Scharniere 55 angelenkte Klappe 56, die gleichzeitig als Strohleitfläche der Ausfallhaube 35 dient. Durch die klappbare Anordnung der Strohleitfläche ist der Zugang zum Kühlergrill für Wartungsarbeiten leicht möglich.

Die Satteleinheit 21 ist auf einem Lagerrahmen 45 aufmontiert, der mit vier hydraulisch ausfahrbaren Stützfüßen 46, 46a und 47, 47a versehen ist. Die vier Stützfüße sind hydraulisch gleichlaufend gekoppelt, wobei jeweils 2 Stützen (47 und 46 bzw. 47a und 46a) übereck hydraulisch in Reihe geschaltet sind und dessen Hydraulikzylinder derart bemessen sind, daß die Ringkolbenflächen der ersten Zylinder (47, 47a) gleich die Kolbenflächen der zweiten Zylinder (46, 46a) sind.

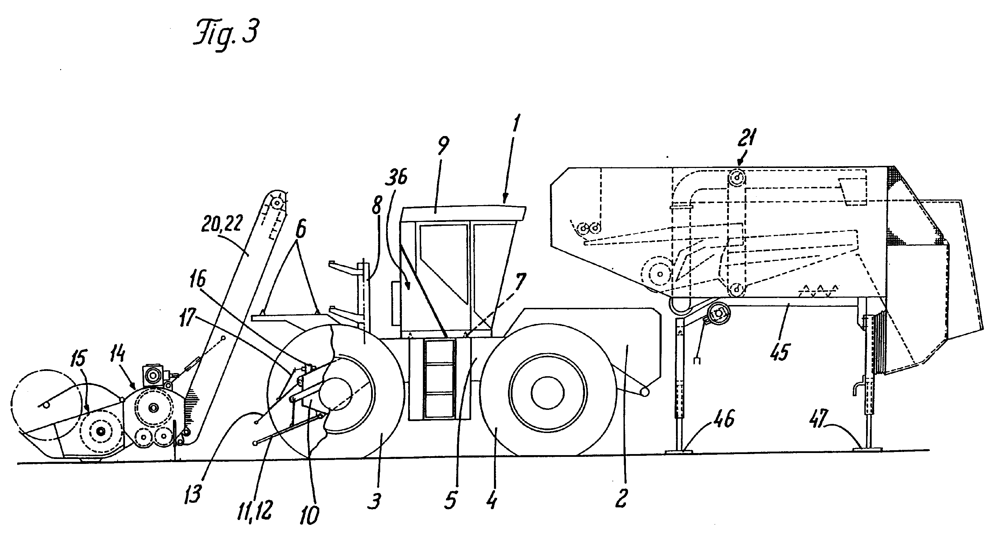

Mit den beiden hinteren Füßen 47 und 47a sind Halter 48 verschweißt, die hinter mit dem Rahmen 5 des Trägerfahrzeugs 1 verbundene Rohrstücke 49 greifen. Die beiden vorderen Füße 46 und 46a sind mit einem Querträger 50 verbunden, die zwei mit kegelförmigen Ausnehmungen 51 versehene, mit Abstand zueinander angeordnete Kupplungsstücke 52 aufweisen. Die Größe der kegelförmigen Ausnehmungen 51 entspricht der Größe der Zapfen, die die Aufnahmen 6 und 7 (Fig. 1) bilden. Dem Rahmen 45 ist für die Antriebe der Satteleinheit 21 ein Getriebe 60 zugeordnet, dem das Drehmoment über einen Kardananschluß 61 vom Motor des Trägerfahrzeugs 1 zugeleitet wird. Die Satteleinheit 21 kann folglich auf den Boden, losgelöst vom Trägerfahrzeug 1, abgestellt werden, ebenso wie die Schneidtisch-Drescheinheit 15, 14 (Fig. 3).

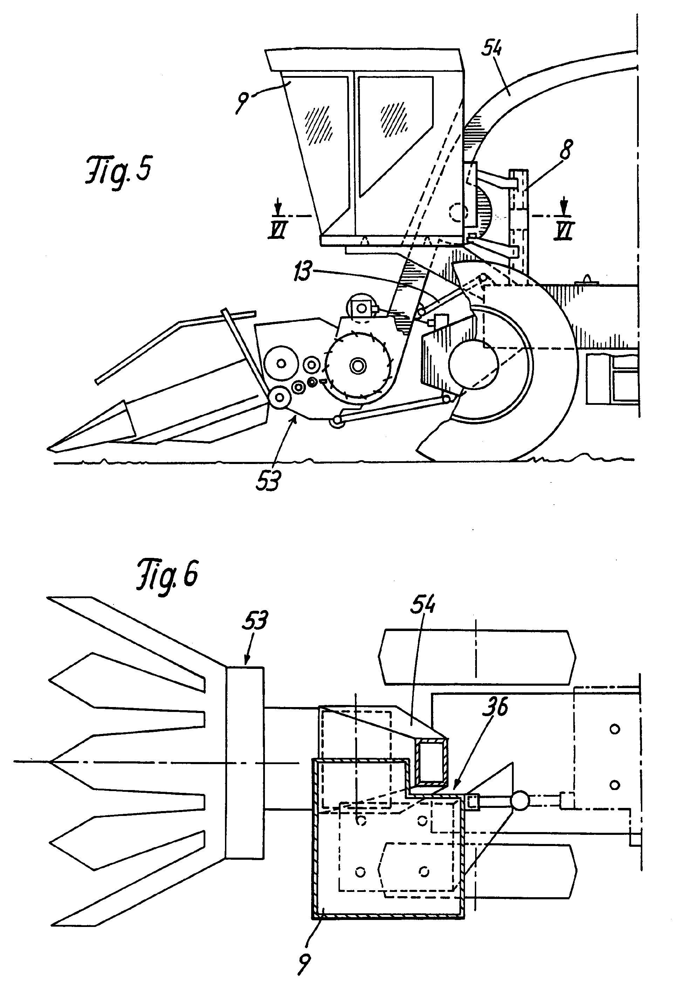

Die Fig. 5 und 6 zeigen das Trägerfahrzeug 1 mit einer vorgeordneten Häckslereinheit 53, deren mittig angeordnetes Auslaufrohr 54 durch den Ausschnitt 36 der Fahrerkabine 9 verläuft, wobei der mittige obere Lenker 13 mit der Wandung des Auslaufrohrs 54 fest verbunden ist.

### Bezugszeichenaufstellung

- 1: - Trägerfahrzeug
- 2: - Motor
- 3: - Räder
- 4: - Räder
- 5: - Rahmen
- 6: - Aufnahmen
- 7: - Aufnahmen
- 8: - Umsetzeinrichtung
- 9: - Fahrerkabine
- 10: - Konsole
- 11: - Lenker
- 12: - Lenker
- 13: - Lenker
- 14: - Axial-Dresch- und Trenneinheit
- 15: - Schneidwerksmulde
- 16: - Antrieb
- 17: - Kardanwelle
- 18: - Getriebe
- 19: - Gehäuse
- 20: - Elevator
- 21: - Satteleinheit
- 22: - Elevator
- 23: - Verteilschnecken
- 24: - Vorbereitungsboden
- 25: - Windsiebeinrichtung
- 26: - Querförderschnecke
- 27: - Elevator
- 28: - Querförderschnecke
- 29: - Satteltank
- 30: - Taschen
- 31: - Taschen
- 32: - Schnecken
- 33: - Höhenförderer
- 34: - Auslaufrohr
- 35: - Auswurfhaube
- 36: - Ausschnitt
- 37: - Schächte
- 38: - Schächte
- 39: - Sieböffnungen
- 40: - Auslaßöffnungen
- 41: - Kanal
- 42: - Seite
- 43: - Faltenbalg
- 44: - Kühlergrill
- 45: - Lagerrahmen
- 46: - Stützfüße
- 46a: - Stützfüße
- 47: - Stützfüße
- 47a: - Stützfüße
- 48: - Halter
- 49: - Rohrstücke
- 50: - Querstrebe
- 51: - Ausnehmungen
- 52: - Kupplungsstücke
- 53: - Häckslereinheit
- 54: - Auslaufrohr
- 55: - Scharniere
- 56: - Klappe
- 60: - Getriebe
- 61: - Kardananschluß

## Patentansprüche

1. Landwirtschaftliches Trägerfahrzeug mit frontseitig an dem Trägerfahrzeug (1) angekuppeltem Ernteaggregat, einer auf das Trägerfahrzeug (1) aufgesetzten Erntegut weiterverarbeitenden und/oder sammelnde Satteleinheit (21) und mit mindestens zwei eine in unterschiedliche Positionen umsetzbare Fahrerkabine (9) aufnehmenden Aufnahmevorrichtungen (6, 7) wobei das Ernteaggregat (14, 15) und die Satteleinheit (21) mit einer das Erntegut nach oben leitenden Fördereinrichtung (20, 21) verbunden sind,
**dadurch gekennzeichnet,**
daß die Fahrerkabine (9) einen Ausschnitt (36) aufweist, durch den die das Erntegut leitende Einrichtung (Elevator 20 bzw.22; Auslaufrohr 52) des Ernteaggregates (15, 14 bzw. 51) zumindest teilweise verläuft und daß der Ausschnitt (36) in Fahrtrichtung betrachtet im hinteren Bereich der der Trägerfahrzeugmitte nahen Seite der Fahrerkabine (9) vorgesehen ist.

2. Landwirtschaftliches Trägerfahrzeug nach dem Anspruch 1,
**dadurch gekennzeichnet,**
daß das Ernteaggregat ein Axial-, Dresch- und Trennwerk (14) mit zwei nebeneinander liegenden Elevatoren (20, 22) ist, wobei ein Elevator (20) durch den Ausschnitt (36) verläuft.

3. Landwirtschaftliches Trägerfahrzeug nach Anspruch 2,
**dadurch gekennzeichnet,**
daß das Ernteaggregat über Lenker (11) bis (13) mit dem Trägerfahrzeug (1) verbunden ist, und daß diese Lenker bei mittiger Kabinenposition das in sich bekannte Schlepperheck-Dreipunktgestänge darstellen.

4. Landwirtschaftliches Trägerfahrzeug nach einem der Ansprüchen 1 bis 3,
**dadurch gekennzeichnet,**
daß die Kabine (9) erst nach Aufnahme des Ernteaggregates (14, 15) in der Fahrzeuglenkern (11, 12, 13) von der einen Kabinenaufnahme (7) in die andere Kabinenaufnahme (6) versetzbar ist.

5. Landwirtschaftliches Trägerfahrzeug nach einem der Ansprüchen 1 bis 4,
**dadurch gekennzeichnet,**
daß die das Erntegut nach oben leitende Einrichtung (Elevator 20, 22 bzw. 54) mitting zum Transportfahrzeug angeordnet ist.

6. Landwirtschaftliches Trägerfahrzeug nach einem der Ansprüchen 3 bis 5,
**dadurch gekennzeichnet,**
daß einer der Lenker (13) und eine Kardanwelle (17) in dem Raum zwischen den beiden nebeneinander liegenden Elevatroren (20, 22) verlaufen.

7. Landwirtschaftliches Trägerfahrzeug nach einem der Ansprüchen 2 bis 5,
**dadurch gekennzeichnet,**
daß sich an die Elevatoren (20 und 22) eine auf das Trägerfahrzeug (1) abgesetzte Sattelteinheit (21) anschließt, die zwei seitliche Kornaufnahmetaschen (30 und 31) sowie eine dazwischen liegende Reinigung aufweist, an die das zu reinigende Erntegut von den Elevatoren (20 und 22) übergeben wird.

8. Landwirtschaftliches Trägerfahrzeug nach Anspruch 7,
**dadurch gekennzeichnet,**
daß sich in Fahrtrichtung nach hinten an die beiden Kornaufnahmetaschen (30 und 31) von oben nach unten verlaufende Luftführungsschächte (37,38) anschließen, zwischen denen eine Spreuauswurfhaube (35) angeordnet ist.

9. Landwirtschaftliches Trägerfahrzeug nach Anspruch 8,
**dadurch gekennzeichnet,**
daß die Luftführungsschächte (37, 38) in ihrem unteren Bereich durch einen Kanal (41) miteinander verbunden sind, der eine über eine Dichtung (Faltenbalg 43) mit dem Kühler (44) des Motors (2) verbindbare Öffnung (42) aufweist.

10. Landwirtschaftliches Trägerfahrzeug nach einem der Ansprüchen 8 bis 9,
**dadurch gekennzeichnet,**
daß eine Trennwand (56) zwischen einem Luftansaugkanal (41) und der Spreuauswurfhaube (35) um einen Drehpunkt (55) schwenkbar angelenkt ist, und daß die Wand (56) auch als Spreuleitfläche der Auswurfhaube (35) ausgeführt ist.

11. Landwirtschaftliches Trägerfahrzeug nach einem der Ansprüchen 1 bis 10,
**dadurch gekennzeichnet,**
daß die Satteleinheit (21) mit einem hydraulisch ausfahrbare Stützfüße (46, 46a, 47, 47a) aufweisenden Lagerrahmen (45) verbunden ist, wobei der Rahmen (45) ein Getriebe (69) für die Antriebe der Satteleinheit (21) trägt und das Getriebe (60) über einen Kardananschluß (61) mit dem Hauptantrieb des Trägerfahrzeugs (1) verbindbar ist.

12. Landwirtschaftliches Trägerfahrzeug nach Anspruch 11,
**dadurch gekennzeichnet,**
daß die vier ausfahrbaren Stützfüße (46, 46a, 47, 47a) des Lagerrahmens (45) hydraulisch gleichlaufend gekoppelt sind, wobei jeweils zwei Füße (47 und 46 bzw. 47a und 46a) übereck hydraulisch in Reihe geschaltet sind und daß deren Hydraulikzylinder derart dimensioniert sind, daß die Ringkolbenflächen der ersten Zylinder (47, 47a) gleich den Kolbenflächen der zweiten Zylinder (46, 46a) sind.

## Claims

1. An agricultural carrier vehicle with harvesting unit coupled to the carrier vehicle (1) at the front, a saddle unit (21) which is fitted on to the carrier vehicle (1) for effecting further processing of and/or collecting crop material, and at least two mounting devices (6, 7) for mounting a driver's cab (9) which can be transposed into different positions, wherein the harvesting unit (14, 15) and the saddle unit (21) are connected to a conveyor device (20, 21) for passing the crop material upwardly, characterised in that the driver's cab (9) has a cut-out (36) through which the device passing the crop material (elevator 20 or 22; discharge pipe 52) of the harvesting unit (15, 14 or 51 respectively) at least partially extends and that the cut-out (36) - as viewed in the direction of travel - is provided in the rear region of the side of the driver's cab (9), which is near the centre of the carrier vehicle.

2. An agricultural carrier vehicle according to claim 1 characterised in that the harvesting unit is an axial threshing and separating mechanism (14) with two juxtaposed elevators (20, 22), one elevator (20) extending through the cut-out (36).

3. An agricultural carrier vehicle according to claim 2 characterised in that the harvesting unit is connected to the carrier vehicle (1) by way of links (11) to (13) and that in the central cab position said links represent the per se known tractor tail three-point linkage.

4. An agricultural carrier vehicle according to one of claims 1 to 3 characterised in that the cab (9) can be displaced from the one cab mounting (7) into the other cab mounting (6) only after mounting of the harvesting unit (14, 15) in the vehicle links (11, 12, 13).

5. An agricultural carrier vehicle according to one of claims 1 to 4 characterised in that the device for passing the crop material upwardly (elevator 20, 22 or 54) is arranged centrally relative to the transport vehicle.

6. An agricultural carrier vehicle according to one of claims 3 to 5 characterised in that one of the links (13) and a cardan shaft (17) extend in the space between the two juxtaposed elevators (20, 22).

7. An agricultural carrier vehicle according to one of claims 2 to 5 characterised in that adjoining the elevators (20 and 22) is a saddle unit (21) which is set down on to the carrier vehicle (1) and which has two lateral grain receiving compartments (30 and 31) and a cleaning means which is disposed therebetween and to which the crop material to be cleaned is transferred by the elevators (20 and 22).

8. An agricultural carrier vehicle according to claim 7 characterised in that adjoining the two grain receiving compartments (30 and 31) rearwardly in the direction of travel are air guide shafts (37, 38) which extend from above downwardly and between which is arranged a chaff discharge hood (35).

9. An agricultural carrier vehicle according to claim 8 characterised in that the air guide shafts (37, 38) are connected together in their lower region by a duct (41) which has an opening (42) which can be connected to the radiator (44) of the engine (2) by way of a sealing means (bellows 43).

10. An agricultural carrier vehicle according to one of claims 8 and 9 characterised in that a partition wall (56) between an air intake duct (41) and the chaff discharge hood (35) is mounted pivotably about a pivot point (55) and that the wall (56) is also adapted as a chaff guide surface of the discharge hood (35).

11. An agricultural carrier vehicle according to one of claims 1 to 10 characterised in that the saddle unit (21) is connected to a mounting frame (45) which has hydraulically extensible support legs (46, 46a, 47, 47a), wherein the frame (45) carries a transmission (69) for the drives of the saddle unit (21) and the transmission (60) can be connected to the main drive of the carrier vehicle (1) by way of a cardan connection (61).

12. An agricultural carrier vehicle according to claim 11 characterised in that the four extensible support legs (46, 46a, 47, 47a) of the mounting frame (45) are hydraulically synchronously coupled, wherein each two legs (47, 46 and 47a, 46a respectively) are hydraulically connected in series diagonally and that the hydraulic cylinders thereof are so dimensioned that the annular piston surface areas of the first cylinders (47, 47a) are equal to the piston surface areas of the second cylinders (46, 46a).

## Revendications

1. Véhicule porteur agricole comprenant un ensemble de récolte accouplé au véhicule porteur (1) sur son côté avant, une semi-remorque (21) montée sur le véhicule porteur (1) qui soumet le produit de la récolte à un traitement additionnel et/ou qui le recueille, et comprenant au moins deux logements (6, 7) qui reçoivent la cabine (3) du conducteur qui peut être disposée dans deux positions différentes, l'ensemble de récolte (14, 15) et la semi-remorque (21) étant reliés à un dispositif convoyeur (20, 22) dirigeant le produit de la récolte vers le haut, caractérisé en ce que la cabine (3) du conducteur comprend une découpe (36) par laquelle passe au moins en partie le dispositif de guidage du produit de la récolte (élévateur 20 ou 22; tube de sortie 52) de l'ensemble de récolte (15, 14 ou 53), et en ce que la découpe (36) vue dans la direction de la marche, est prévue dans la région arrière et sur le côté de la cabine (9) du conducteur qui est à proximité du centre du véhicule porteur.

2. Véhicule porteur agricole selon la revendication 1, caractérisé en ce que l'ensemble de récolte est un mécanisme de battage et de séparation axial (14) comprenant deux élévateurs (20, 22) disposés l'un à côté de l'autre, un élévateur (20) passant par la découpe (36).

3. Véhicule porteur agricole selon la revendication 1, caractérisé en ce que l'ensemble de récolte est relié par l'intermédiaire de bras (11) à (13) au véhicule porteur (1) et en ce que ces bras constituent, dans la position centrale de la cabine, la timonerie à trois points connue en soi à l'arrière du tracteur.

4. Véhicule porteur agricole selon l'une quelconque des revendications 1 à 3, caractérisé en ce que la cabine (9) du conducteur ne peut être passée d'un logement (7) vers l'autre logement (6) qu'après réception de l'ensemble de récolte (14, 15) sur les bras (11, 12, 13) du véhicule.

5. Véhicule porteur agricole selon l'une quelconque des revendications 1 à 4, caractérisé en ce que le dispositif convoyeur vers le haut (élévateur 20, 22 ou 54) est disposé centralement par rapport au véhicule porteur.

6. Véhicule porteur agricole selon l'une quelconque des revendications 3 à 5, caractérisé en ce que l'un des bras (13) et un arbre cardan (17) passent dans l'espace situé entre les deux élévateurs (20, 22) disposés côte à côte.

7. Véhicule porteur agricole selon l'une quelconque des revendications 2 à 5, caractérisé en ce qu'une semi-remorque (21) montée sur le véhicule porteur (1) est raccordée aux élévateurs (20 et 22), semi-remorque qui comprend deux poches latérales de réception de grain (30 et 31) ainsi qu'un dispositif de nettoyage situé entre elles, auquel le produit de la récolte à nettoyer est transmis par les élévateurs (20 et 22).

8. Véhicule porteur agricole selon la revendication 7, caractérisé en ce que des cheminées de guidage d'air (37, 38) orientées du haut vers le bas sont raccordées aux deux poches de réception de grains (30 et 31) vers l'arrière en direction de la marche, cheminées entre lesquelles est disposée un hotte de décharge de balle (35).

9. Véhicule porteur agricole selon la revendication 8, caractérisé en ce que les cheminées de guidage d'air (37, 38) sont reliées l'une à l'autre dans leur région inférieure par un canal (41), qui comprend une ouverture (42) pouvant être reliée par l'intermédiaire d'une garniture (soufflet) (43) au radiateur (44) du moteur (2).

10. Véhicule porteur agricole selon la revendication 8 ou 9, caractérisé en ce qu'une paroi de séparation (56) est articulée entre un canal d'aspiration d'air (41) et la hotte de décharge de balle (35) de façon pivotante autour d'un point de rotation (55) et en ce que la paroi (56) est également constituée sous la forme d'une surface de guidage de balle de la hotte de décharge (35).

11. Véhicule porteur agricole selon l'une quelconque des revendications 1 à 10, caractérisé en ce que la semi-remorque (21) est reliée à un châssis de support (45) comprenant des pieds d'appui (46, 46a, 47, 47a) pouvant être déployés hydrauliquement, le châssis (45) supportant une boîte à engrenages (60) pour l'entraînement de la semi-remorque (21) et la boîte à engrenages (60) pouvant être reliée au mécanisme principal du véhicule porteur (1) par l'intermédiaire d'un raccord cardan (61).

12. Véhicule porteur agricole selon la revendication 11, caractérisé en ce que les quatre pieds d'appui déployables (46, 46a, 47, 47a) du châssis de support (45) sont accouplés hydrauliquement en synchronisme, deux pieds respectifs (47 et 46 ou 47a et 46a) étant montés hydrauliquement en série en diagonale et en ce que leurs vérins hydrauliques sont dimensionnés de manière que les surfaces annulaires des pistons des premiers vérins (47, 47a) soient égales aux surfaces des pistons des seconds vérins (46, 46a).
